# EUROPEAN PATENT APPLICATION

(11) **EP 4 586 441 A1**
(43) Date of publication of application: **16.07.2025**
(21) Application number: 23870342.5
(22) Date of filing: 13.09.2023
(51) Int. Cl.: H02J 3/46, H02M 1/00, H02M 7/42

(54) **POWER CONTROL METHOD, POWER CONVERTER AND POWER SUPPLY SYSTEM**

(30) Priority: 29.09.2022 CN 202211202008
(71) Applicant: Huawei Digital Power Technologies Co., Ltd., Shenzhen, Guangdong 518043 (CN)
(72) Inventor: CHEN, Jianbo, Shenzhen, Guangdong 518043 (CN); XIN, Kai, Shenzhen, Guangdong 518043 (CN); LI, Junjie, Shenzhen, Guangdong 518043 (CN); DONG, Mingxuan, Shenzhen, Guangdong 518043 (CN)
(74) Representative: Isarpatent
(86) International application number: PCT/CN2023/118636
(87) International publication number: WO 2024/067105

(57) **Abstract**

This application provides a power control method, a power converter, and a power supply system. The power converter includes a controller and a power conversion circuit, and the controller is connected to the power conversion circuit. The controller is configured to obtain a target power reference value of the power conversion circuit based on an output electrical quantity of the power conversion circuit and a multi-segment droop hysteresis area. The controller is further configured to control an output power value of the power conversion circuit to be equal to the target power reference value. According to this application, an output power of the power converter in a region can be quickly adjusted in a scenario with a high PV-to-storage ratio, thereby preventing repeated and continuous oscillations of the output power of the power converter, and improving reliability and security of the power converter.

## Description

This application claims priority to Chinese Patent Application No. 202211202008.7, filed with the China National Intellectual Property Administration on September 29, 2022 and entitled "POWER CONTROL METHOD, POWER CONVERTER, AND POWER SUPPLY SYSTEM", which is incorporated herein by reference in its entirety.

### TECHNICAL FIELD

This application relates to the field of electronic power technologies, and in particular, to a power control method, a power converter, and a power supply system.

### BACKGROUND

With development of new energy technologies, in a micro grid scenario in which new energy is used as a main power supply, an energy storage converter is usually used as a voltage source, and a new energy converter, for example, a photovoltaic converter or a wind converter, is used as a current source, to jointly supply power to a load in a microgrid. When a grid structure of the micro grid is designed and a capacity of the new energy converter is configured, in a region controlled by a circuit breaker, a capacity of the current source is much higher than a capacity of the voltage source. For example, a ratio of an installed capacity of the photovoltaic converter to an installed capacity of the energy storage converter is 2 or 3, or even higher, forming a scenario with a partially high PV-to-storage ratio. When a circuit breaker in a region with a high PV-to-storage ratio is turned off due to a large disturbance or fault occurring in the microgrid, all or a large part of an output power of the current source is injected into the voltage source. Consequently, the voltage source may be damaged due to overvoltage, overfrequency, or even overload.

In a research and experiment process, the inventor of this application finds that, in the conventional technology, the installed capacity of the energy storage converter is partially increased to avoid a scenario with a high PV-to-storage ratio; in this case, when a circuit breaker in a region is turned off, the energy storage converter is capable of stabilizing a voltage and a frequency, and no overload occurs. However, in this technical solution, there is a great constraint on a configuration of an installed capacity of each region of the microgrid, and an installed capacity of a power supply unit and the installed capacity of the energy storage converter cannot be flexibly configured based on a local condition. In addition, a configured total installed capacity is large, and costs are high.

### SUMMARY

This application provides a power control method, a power converter, and a power supply system, to quickly adjust an output power of the power converter in a region in a scenario with a high PV-to-storage ratio, thereby improving reliability and security of the power converter.

According to a first aspect, this application provides a power converter. The power converter includes a controller and a power conversion circuit, and the controller is connected to the power conversion circuit. The controller may be configured to obtain a target power reference value of the power conversion circuit based on an output electrical quantity of the power conversion circuit and a multi-segment droop hysteresis area. The controller may be further configured to control an output power value of the power conversion circuit to be equal to the target power reference value.

In the solution provided in this embodiment, an output power of the power conversion circuit is limited based on the power conversion circuit by adding the controller. An input of the controller is the output electrical quantity of the power conversion circuit, and an output of the controller is a power limit value. The multi-segment droop hysteresis area indicates a correspondence between the output electrical quantity and the power limit value. In other words, the controller may obtain the power limit value based on the output electrical quantity and the multi-segment droop hysteresis area. The power limit value is compared with an original power reference value of the power conversion circuit to obtain the target power reference value, and the output power value of the power conversion circuit is controlled to be equal to the target power reference value, to quickly adjust an output power of the power converter in a region in a scenario with a high PV-to-storage ratio, thereby improving reliability and security of the power converter.

In a possible implementation, the controller is configured to: obtain, based on the output electrical quantity and the multi-segment droop hysteresis area, the power limit value corresponding to the output electrical quantity; when the original power reference value is less than 0, obtain the target power reference value equal to 0; when the original power reference value is greater than or equal to 0 and less than or equal to the power limit value, obtain the target power reference value equal to the original power reference value; and when the original power reference value is greater than the power limit value, obtain the target power reference value equal to the power limit value.

In the solution provided in this embodiment, the multi-segment droop hysteresis area indicates the correspondence between the output electrical quantity and the power limit value. In other words, the controller may obtain the power limit value based on the output electrical quantity and the multi-segment droop hysteresis area. That the controller obtains the target power reference value by comparing the power limit value with the original power reference value of the power conversion circuit may be understood as that the target power reference value is obtained by limiting the original power reference value based on the power limit value. For example, a minimum limit value is 0, and a maximum limit value is the power limit value. In other words, the target power reference value is greater than or equal to 0 and less than or equal to the power limit value. Specifically, when the original power reference value is less than 0, the target power reference value obtained through limiting is equal to 0. When the original power reference value is greater than or equal to 0 and less than or equal to the power limit value, the target power reference value obtained through limiting is equal to the original power reference value. When the original power reference value is greater than the power limit value, the target power reference value obtained through limiting is equal to the power limit value. The target power reference value is obtained by limiting the original power reference value, and the output power value of the power conversion circuit is controlled to be equal to the target power reference value, to quickly adjust the output power of the power converter in the region in the scenario with a high PV-to-storage ratio, thereby improving the reliability and security of the power converter.

In a possible implementation, the controller is configured to: when the output electrical quantity is greater than or equal to a first electrical quantity threshold and less than a second electrical quantity threshold, obtain the power limit value corresponding to the output electrical quantity as a value corresponding to a hysteresis curve segment in the multi-segment droop hysteresis area.

In the solution provided in this embodiment, when the output electrical quantity is greater than or equal to the first electrical quantity threshold, the power limit value may be obtained based on the multi-segment droop hysteresis area. The multi-segment droop hysteresis area may include the hysteresis curve segment and N droop curve segments. Specifically, when the output electrical quantity is greater than or equal to the first electrical quantity threshold and less than the second electrical quantity threshold, the power limit value may be the value corresponding to the hysteresis curve segment. It may be understood that the hysteresis curve segment can prevent the power limit value from repeatedly entering a droop curve within short time, provide sufficient time for upper-layer power scheduling, and avoid significant fluctuation of the output power, to prevent repeated and continuous oscillations of the output power of the power converter, and improve system stability.

In a possible implementation, the controller is configured to: when the output electrical quantity is greater than or equal to the second electrical quantity threshold and less than a third electrical quantity threshold, obtain the power limit value corresponding to the output electrical quantity as a value corresponding to a 1^{st} droop curve segment in the multi-segment droop hysteresis area; when the output electrical quantity is greater than or equal to the third electrical quantity threshold and less than a fourth electrical quantity threshold, obtain the power limit value corresponding to the output electrical quantity as a value corresponding to a 2^{nd} droop curve segment in the multi-segment droop hysteresis area; and when the output electrical quantity is greater than or equal to an (N+1)^{th} electrical quantity threshold and less than an (N+2)^{th} electrical quantity threshold, obtain the power limit value corresponding to the output electrical quantity as a value corresponding to an N^{th} droop curve segment in the multi-segment droop hysteresis area, where N is a positive integer greater than or equal to 1.

In the solution provided in this embodiment, when the output electrical quantity is greater than the second electrical quantity threshold, the power limit value enters the N droop curve segments, and the power limit value may correspond to a value corresponding to a droop curve segment in the N droop curve segments based on the electrical quantity thresholds. Different power limit values are used in different reference voltage ranges. The power limit value is compared with the original power reference value of the power conversion circuit to obtain the target power reference value, and the output power value of the power conversion circuit is controlled to be equal to the target power reference value, to quickly adjust the output power of the power converter in the region in the scenario with a high PV-to-storage ratio, thereby improving reliability and security of the power converter.

In a possible implementation, when the power limit value corresponding to the output electrical quantity is a value corresponding to the N droop curve segments in the multi-segment droop hysteresis area, a power limit value corresponding to a first moment is less than or equal to a power limit value corresponding to a second moment, and the first moment is later than the second moment.

In the solution provided in this embodiment, on the N droop curve segments, adjacent power limit values in a time sequence only decrease rather than increase, so that the output power of the power converter can be prevented from significantly fluctuating, to prevent repeated and continuous oscillations of the output power of the power converter, and improve the system stability.

In a possible implementation, the controller is configured to: when time at which the output electrical quantity is less than the second electrical quantity threshold reaches a first threshold, increase, based on preset time, the power limit value to the value corresponding to the hysteresis curve segment in the multi-segment droop hysteresis area.

In the solution provided in this embodiment, when it is detected that the output electrical quantity of the power converter tends to be normal, the power limit value is restored. To be specific, when the time at which the output electrical quantity is less than the second electrical quantity threshold reaches the first threshold, it may indicate that the output electrical quantity of the power converter is in a normal state, and the power limit value may be restored based on a specific predefined gradient to the value corresponding to the hysteresis curve segment. The specific predefined gradient may be understood as preset time, and the power limit value increases to the value corresponding to the hysteresis curve segment in the multi-segment droop hysteresis area within the preset time.

In a possible implementation, the controller is configured to: when a quantity of times that the output electrical quantity is greater than or equal to the second electrical quantity threshold exceeds a second threshold, increase the preset time.

In the solution provided in this embodiment, a power limit value restoration speed may be correspondingly slowed down based on a quantity of times of entering the N droop curve segments, to provide sufficient adjustment time for upper-layer power scheduling.

In a possible implementation, the target power reference value is a target active power reference value or a target reactive power reference value.

According to a second aspect, this application provides a power control method for a power converter. The method is applied to a controller in the power converter. The power converter further includes a power conversion circuit, and the controller is connected to the power conversion circuit. The method may include: obtaining a target power reference value of the power conversion circuit based on an output electrical quantity of the power conversion circuit and a multi-segment droop hysteresis area; and controlling an output power value of the power conversion circuit to be equal to the target power reference value.

In the solution provided in this embodiment, an output power of the power conversion circuit is limited based on the power conversion circuit by adding the controller. An input of the controller is the output electrical quantity of the power conversion circuit, and an output of the controller is a power limit value. The multi-segment droop hysteresis area indicates a correspondence between the output electrical quantity and the power limit value. In other words, the controller may obtain the power limit value based on the output electrical quantity and the multi-segment droop hysteresis area. The power limit value is compared with an original power reference value of the power conversion circuit to obtain the target power reference value, and the output power value of the power conversion circuit is controlled to be equal to the target power reference value, to quickly adjust an output power of the power converter in a region in a scenario with a high PV-to-storage ratio, thereby improving reliability and security of the power converter.

In a possible implementation, the obtaining a target power reference value of the power conversion circuit based on an output electrical quantity of the power conversion circuit and a multi-segment droop hysteresis area includes: obtaining, based on the output electrical quantity and the multi-segment droop hysteresis area, a power limit value corresponding to the output electrical quantity; when the original power reference value is less than 0, obtain the target power reference value equal to 0; when the original power reference value is greater than or equal to 0 and less than or equal to the power limit value, obtain the target power reference value equal to the original power reference value; and when the original power reference value is greater than the power limit value, obtain the target power reference value equal to the power limit value.

In the solution provided in this embodiment, the multi-segment droop hysteresis area indicates the correspondence between the output electrical quantity and the power limit value. In other words, the controller may obtain the power limit value based on the output electrical quantity and the multi-segment droop hysteresis area. That the controller obtains the target power reference value by comparing the power limit value with the original power reference value of the power conversion circuit may be understood as that the target power reference value is obtained by limiting the original power reference value based on the power limit value. For example, a minimum limit value is 0, and a maximum limit value is the power limit value. In other words, the target power reference value is greater than or equal to 0 and less than or equal to the power limit value. Specifically, when the original power reference value is less than 0, the target power reference value obtained through limiting is equal to 0. When the original power reference value is greater than or equal to 0 and less than or equal to the power limit value, the target power reference value obtained through limiting is equal to the original power reference value. When the original power reference value is greater than the power limit value, the target power reference value obtained through limiting is equal to the power limit value. The target power reference value is obtained by limiting the original power reference value, and the output power value of the power conversion circuit is controlled to be equal to the target power reference value, to quickly adjust the output power of the power converter in the region in the scenario with a high PV-to-storage ratio, thereby improving the reliability and security of the power converter.

In a possible implementation, the obtaining, based on the output electrical quantity and the multi-segment droop hysteresis area, a power limit value corresponding to the output electrical quantity includes: when the output electrical quantity is greater than or equal to a first electrical quantity threshold and less than a second electrical quantity threshold, obtaining the power limit value corresponding to the output electrical quantity as a value corresponding to a hysteresis curve segment in the multi-segment droop hysteresis area.

In the solution provided in this embodiment, when the output electrical quantity is greater than or equal to the first electrical quantity threshold, the power limit value may be obtained based on the multi-segment droop hysteresis area. The multi-segment droop hysteresis area may include the hysteresis curve segment and N droop curve segments. Specifically, when the output electrical quantity is greater than or equal to the first electrical quantity threshold and less than the second electrical quantity threshold, the power limit value may be the value corresponding to the hysteresis curve segment. It may be understood that the hysteresis curve segment can prevent the power limit value from repeatedly entering a droop curve within short time, provide sufficient time for upper-layer power scheduling, and avoid significant fluctuation of the output power, to prevent repeated and continuous oscillations of the output power of the power converter, and improve system stability.

In a possible implementation, the method further includes: when the output electrical quantity is greater than or equal to the second electrical quantity threshold and less than a third electrical quantity threshold, obtaining the power limit value corresponding to the output electrical quantity as a value corresponding to a 1^{st} droop curve segment in the multi-segment droop hysteresis area; when the output electrical quantity is greater than or equal to the third electrical quantity threshold and less than a fourth electrical quantity threshold, obtaining the power limit value corresponding to the output electrical quantity as a value corresponding to a 2^{nd} droop curve segment in the multi-segment droop hysteresis area; and when the output electrical quantity is greater than or equal to an (N+1)^{th} electrical quantity threshold and less than an (N+2)^{th} electrical quantity threshold, obtaining the power limit value corresponding to the output electrical quantity as a value corresponding to an N^{th} droop curve segment in the multi-segment droop hysteresis area, where N is a positive integer greater than or equal to 1.

In the solution provided in this embodiment, when the output electrical quantity is greater than the second electrical quantity threshold, the power limit value enters the N droop curve segments, and the power limit value may correspond to a value corresponding to a droop curve segment in the N droop curve segments based on the electrical quantity thresholds. Different power limit values are used in different reference voltage ranges. The power limit value is compared with the original power reference value of the power conversion circuit to obtain the target power reference value, and the output power value of the power conversion circuit is controlled to be equal to the target power reference value, to quickly adjust the output power of the power converter in the region in the scenario with a high PV-to-storage ratio, thereby improving reliability and security of the power converter.

In a possible implementation, when the power limit value corresponding to the output electrical quantity is a value corresponding to the N droop curve segments in the multi-segment droop hysteresis area, a power limit value corresponding to a first moment is less than or equal to a power limit value corresponding to a second moment, and the first moment is later than the second moment.

In the solution provided in this embodiment, on the N droop curve segments, adjacent power limit values in a time sequence only decrease rather than increase, so that the output power of the power converter can be prevented from significantly fluctuating, to prevent repeated and continuous oscillations of the output power of the power converter, and improve the system stability.

In a possible implementation, the method further includes: when time at which the output electrical quantity is less than the second electrical quantity threshold reaches a first threshold, increasing, based on preset time, the power limit value to the value corresponding to the hysteresis curve segment in the multi-segment droop hysteresis area.

In the solution provided in this embodiment, when it is detected that the output electrical quantity of the power converter tends to be normal, the power limit value is restored. To be specific, when the time at which the output electrical quantity is less than the second electrical quantity threshold reaches the first threshold, it may indicate that the output electrical quantity of the power converter is in a normal state, and the power limit value may be restored based on a specific predefined gradient to the value corresponding to the hysteresis curve segment. The specific predefined gradient may be understood as preset time, and the power limit value increases to the value corresponding to the hysteresis curve segment in the multi-segment droop hysteresis area within the preset time.

In a possible implementation, the method further includes: when a quantity of times that the output electrical quantity is greater than or equal to the second electrical quantity threshold exceeds a second threshold, increasing the preset time.

In the solution provided in this embodiment, a power limit value restoration speed may be correspondingly slowed down based on a quantity of times of entering the N droop curve segments, to provide sufficient adjustment time for upper-layer power scheduling.

In a possible implementation, the target power reference value is a target active power reference value or a target reactive power reference value.

According to a third aspect, a power supply system is provided. The power supply system includes a power supply unit and the power converter provided in any one of the first aspect or the possible implementations of the first aspect that is connected (for example, directly connected or indirectly connected) to the power supply unit. The power converter is further connected to an alternating current load.

In a possible implementation, the power supply unit is a photovoltaic array, and the power converter is a photovoltaic power converter. In a process of supplying power to the alternating current load, the photovoltaic power converter may convert a direct current voltage provided by the photovoltaic array into an alternating current voltage, and supply power to the alternating current load based on the alternating current voltage. When the photovoltaic power converter includes a power conversion circuit and a controller, the controller may obtain a target power reference value of the power conversion circuit based on an output electrical quantity of the power conversion circuit and a multi-segment droop hysteresis area. An output power value of the power conversion circuit is controlled to be equal to the target power reference value, to quickly adjust an output power of the power converter in a region in a scenario with a high PV-to-storage ratio, thereby improving reliability and security of the power converter.

In a possible implementation, the power supply unit is a wind power generator or an energy storage battery, and the power converter is an energy storage power converter. In a process of supplying power to the alternating current load, the energy storage power converter may convert a direct current voltage provided by the wind power generator or the energy storage battery into an alternating current voltage, and supply power to the alternating current load based on the alternating current voltage. When the energy storage power converter includes a power conversion circuit and a controller, the controller may obtain a target power reference value of the power conversion circuit based on an output electrical quantity of the power conversion circuit and a multi-segment droop hysteresis area. An output power value of the power conversion circuit is controlled to be equal to the target power reference value, to quickly adjust an output power of the power converter in a region in a scenario with a high PV-to-storage ratio, thereby improving reliability, power supply security, and adaptability of the power supply system.

In a possible implementation, the power supply system further includes a direct current combiner box. The power supply unit may be connected to an input end of the power converter through the direct current combiner box. In the process of supplying power to the alternating current load, the direct current combiner box may combine direct current voltages provided by the power supply unit and output a combined direct current voltage to the power converter. In this case, the power converter (for example, a centralized power converter) may supply power to the alternating current load based on the combined direct current voltage. In this power supply process, the power converter can quickly adjust the output power in the region in the scenario with a high PV-to-storage ratio. Therefore, the reliability, power supply security, and adaptability of the power supply system can be improved.

In a possible implementation, the power supply system further includes an energy storage converter. The energy storage converter may store a direct current provided by the power supply unit. In a process of supplying power to a direct current load, the energy storage converter may supply power to the direct current load based on stored electric energy. The energy storage converter may further store excess electric energy provided to the power converter for energy conservation. In this power supply process, the power converter can quickly adjust the output power in the region in the scenario with a high PV-to-storage ratio, thereby reducing an impact on the energy storage converter. Therefore, the reliability, power supply security, and adaptability of the power supply system can be improved.

In this application, the output power of the power conversion circuit is limited based on the power conversion circuit by adding the controller. An input of the controller is the output electrical quantity of the power conversion circuit, and an output of the controller is a power limit value. The multi-segment droop hysteresis area indicates a correspondence between the output electrical quantity and the power limit value. In other words, the controller may obtain the power limit value based on the output electrical quantity and the multi-segment droop hysteresis area. The power limit value is compared with an original power reference value of the power conversion circuit to obtain the target power reference value, and the output power value of the power conversion circuit is controlled to be equal to the target power reference value, to quickly adjust the output power of the power converter in the region in the scenario with a high PV-to-storage ratio, thereby improving the reliability and security of the power converter.

### BRIEF DESCRIPTION OF DRAWINGS

FIG. 1 is a diagram of an application scenario of a power converter according to this application;
FIG. 2 is a diagram of a structure of a power supply system according to this application;
FIG. 3 is a diagram of another structure of a power supply system according to this application;
FIG. 4 is a diagram of a structure of a power converter according to this application;
FIG. 5 is a diagram of a curve of a power limit value according to this application; and
FIG. 6 is a schematic flowchart of a power control method for a power converter according to this application.

### DESCRIPTION OF EMBODIMENTS

With development of new energy technologies, in a microgrid scenario in which new energy is used as a main power supply, an energy storage converter is usually used as a voltage source, and a new energy converter, for example, a photovoltaic converter or a wind converter, is used as a current source, to jointly supply power to a load in a microgrid. When a grid structure of the microgrid is designed and a capacity of the new energy converter is configured, in a region controlled by a circuit breaker, a capacity of the current source is much higher than a capacity of the voltage source. For example, a ratio of an installed capacity of the photovoltaic converter to an installed capacity of the energy storage converter is 2 or 3, or even higher, forming a scenario with a partially high PV-to-storage ratio. When a circuit breaker in a region with a high PV-to-storage ratio is turned off due to a large disturbance or fault occurring in the microgrid, all or a large part of an output power of the current source is injected into the voltage source. Consequently, the voltage source may be damaged due to overvoltage, overfrequency, or even overload.

This application is applicable to a scenario with a high PV-to-storage ratio in the microgrid. The scenario with a high PV-to-storage ratio in this application may be understood as that a ratio of an installed capacity of a new energy converter to an installed capacity of an energy storage converter is greater than 1. In a scenario in which the new energy converter and the energy storage converter discharge at full power and a sudden load cut-off occurs, the energy storage converter switches from discharging to charging, and the full power of the new energy converter with a high ratio is injected into the energy storage converter, to increase a load voltage and a load frequency. As a result, the energy storage converter may be damaged in the transient state.

A power converter (an alternating current/direct current converter) provided in this application may be applied to a plurality of application fields such as the new energy intelligent microgrid field, the power transmission and distribution field, the new energy field (for example, the photovoltaic grid-connected field or the wind grid-connected field), the photovoltaic power generation field (for example, the photovoltaic power converter), the wind power generation field, the high-power converter field (for example, converting a direct current voltage into a high-power high-voltage alternating current), or the electric device field (for example, a plurality of electric devices). This may be specifically determined based on an actual application scenario and is not limited herein.

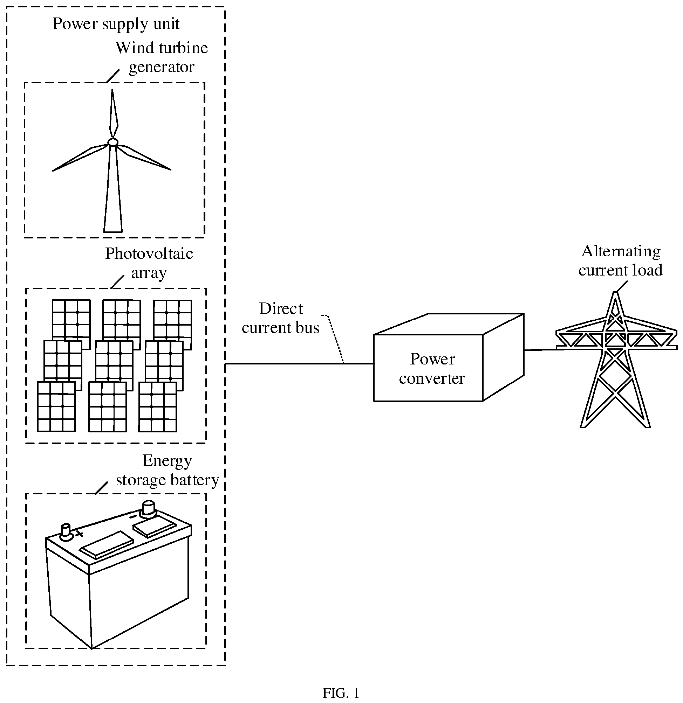

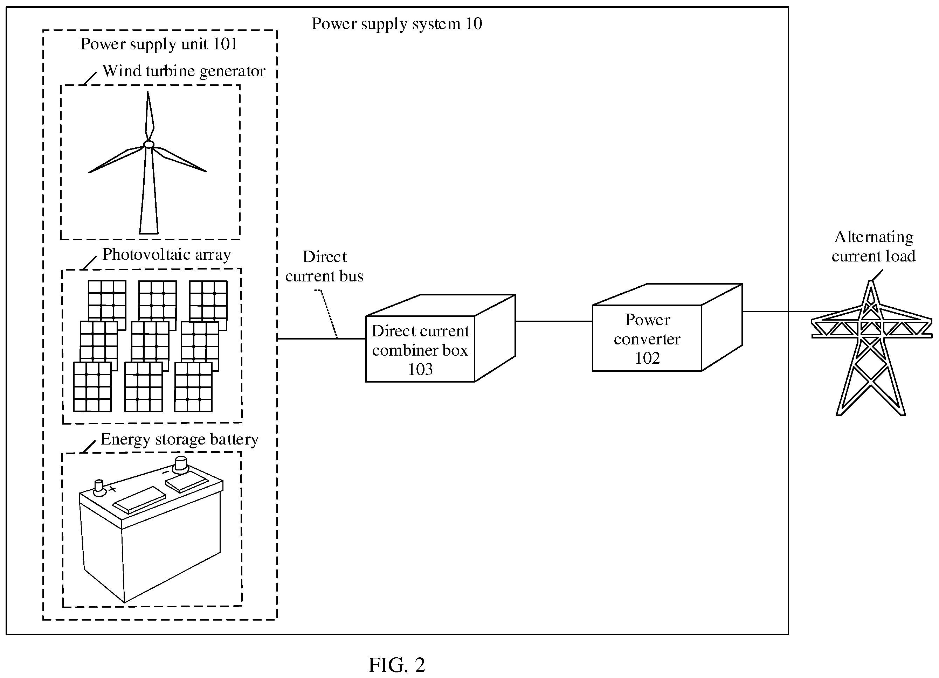

The power converter provided in this application may be adapted to a high-power power converter application scenario and a medium- and low-power power converter application scenario, for example, a photovoltaic power supply application scenario, a wind power grid-connected power supply scenario, an electric vehicle charging scenario, or another application scenario. The following uses the photovoltaic power supply application scenario as an example for description. Details are not described below again. FIG. 1 is a diagram of an application scenario of a power converter according to this application. As shown in FIG. 1, the application scenario may include a power supply unit, a positive direct current bus, a negative direct current bus, and a power converter. The power supply unit may be connected to an input end of the power converter through the positive direct current bus and the negative direct current bus, and an output end of the power converter may be configured to connect to an alternating current load. Optionally, the alternating current load may be an alternating current power grid, or may be the others. The power supply unit may be a wind turbine generator, a photovoltaic array, or an energy storage battery. The photovoltaic array herein may be a photovoltaic module group, one photovoltaic module group may include one or more photovoltaic strings connected in parallel, and one photovoltaic string may be obtained by connecting one or more photovoltaic modules in series. The photovoltaic module herein may be a solar panel, a photovoltaic panel, or the like. When the power converter includes a power conversion circuit and a controller, the controller may obtain a target power reference value of the power conversion circuit based on an output electrical quantity of the power conversion circuit and a multi-segment droop hysteresis area. An output power value of the power conversion circuit is controlled to be equal to the target power reference value, to quickly adjust an output power of the power converter in a region in a scenario with a high PV-to-storage ratio, thereby improving reliability, power supply security, and adaptability of a power supply system. The following describes, with reference to FIG. 2 to FIG. 6, a power converter, a power control method for the power converter, a power supply system, and a working principle thereof that are provided in this application by using examples.

In some feasible implementations, the following describes an example of a power supply system including a power converter. FIG. 2 is a diagram of a structure of a power supply system according to this application. As shown in FIG. 2, the power supply system 10 includes a power supply unit 101 and a power converter 102 (for example, a power converter 40 described below) connected (for example, directly or indirectly connected) to the power supply unit 101, and an output end of the power converter may be connected (for example, directly or indirectly connected to) to an alternating current load. In a process of supplying power to the alternating current load, the power converter 102 may convert a direct current voltage provided by the power supply unit 101 into an alternating current voltage, and supply power to the alternating current load based on the alternating current voltage. When the power converter 102 includes a controller and a power conversion circuit, the controller may obtain a target power reference value of the power conversion circuit based on an output electrical quantity of the power conversion circuit and a multi-segment droop hysteresis area, and control an output power value of the power conversion circuit to be equal to the target power reference value, to quickly adjust an output power of the power converter in a region in a scenario with a high PV-to-storage ratio, thereby improving reliability and security of the power converter.

The power supply unit 101 may be a photovoltaic array, and the power converter 102 is a photovoltaic power converter. In a process of supplying power to the alternating current load, the photovoltaic power converter may convert a direct current voltage provided by the photovoltaic array into an alternating current voltage, and supply power to the alternating current load based on the alternating current voltage. When the photovoltaic power converter includes a controller and a power conversion circuit, the controller may obtain a target power reference value of the power conversion circuit based on an output electrical quantity of the power conversion circuit and a multi-segment droop hysteresis area, and control an output power value of the power conversion circuit to be equal to the target power reference value, to quickly adjust an output power of the power converter in a region in a scenario with a high PV-to-storage ratio, thereby improving reliability and security of the power converter.

The power supply unit 101 may be a wind power generator or an energy storage battery, and the power converter 102 is an energy storage power converter. In a process of supplying power to the alternating current load, the energy storage power converter may convert a direct current voltage provided by the wind power generator or the energy storage battery into an alternating current voltage, and supply power to the alternating current load based on the alternating current voltage. When the energy storage power converter includes a controller and a power conversion circuit, the controller may obtain a target power reference value of the power conversion circuit based on an output electrical quantity of the power conversion circuit and a multi-segment droop hysteresis area, and control an output power value of the power conversion circuit to be equal to the target power reference value, to quickly adjust an output power of the power converter in a region in a scenario with a high PV-to-storage ratio, thereby improving reliability and security of the power converter.

In some feasible implementations, the power supply system 10 shown in FIG. 2 further includes a direct current combiner box 103. The power supply unit 101 may be connected to an input end of the power converter 102 through the direct current combiner box 103, and the output end of the power converter 102 may be connected (for example, directly or indirectly connected) to the alternating current load. In a process of supplying power to the alternating current load, the direct current combiner box 103 may combine direct current voltages provided by the power supply unit 101 and output a combined direct current voltage to the power converter 102. In this case, the power converter 102 (for example, a centralized photovoltaic power converter) may supply power to the alternating current load based on the combined direct current voltage. In this power supply process, the reliability and power supply security of the power converter 102 are higher, so reliability, power supply security, and adaptability of the power supply system 10 can be improved.

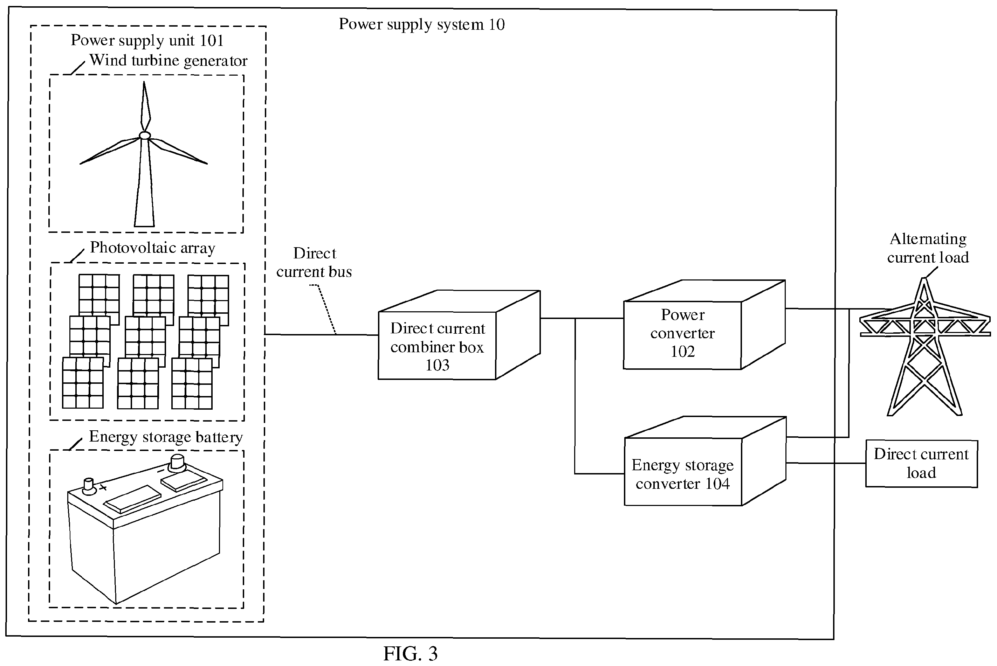

Optionally, FIG. 3 is a diagram of another structure of a power supply system according to this application. In some feasible implementations, as shown in FIG. 3, the power supply system 10 further includes an energy storage converter 104. An output end of the direct current combiner box 103 may be separately connected to an input end of the power converter 102 and an input end of the energy storage converter 104. The output end of the power converter 102 may be connected to the alternating current load, and an output end of the energy storage converter 104 may be connected to the alternating current load and a direct current load. The energy storage converter 104 may store a direct current provided by the power supply unit 101. In a process of supplying power to the direct current load, the energy storage converter 104 may supply power to the direct current load based on stored electric energy. The energy storage converter 104 may further store excess electric energy provided to the power converter for energy conservation. It may be understood that, when the energy storage converter 104 supplies power to the alternating current load, the energy storage converter 104 may be connected to the alternating current load through an inverter. The inverter converts a direct current voltage provided by the energy storage converter into an alternating current voltage, and supplies power to the alternating current load based on the alternating current voltage. When the power converter 102 includes a controller and a power conversion circuit, the controller may obtain a target power reference value of the power conversion circuit based on an output electrical quantity of the power conversion circuit and a multi-segment droop hysteresis area, and control an output power value of the power conversion circuit to be equal to the target power reference value, to quickly adjust an output power of the power converter in a region in a scenario with a high PV-to-storage ratio, thereby reducing an impact on the energy storage converter, and improving reliability and security of the power converter.

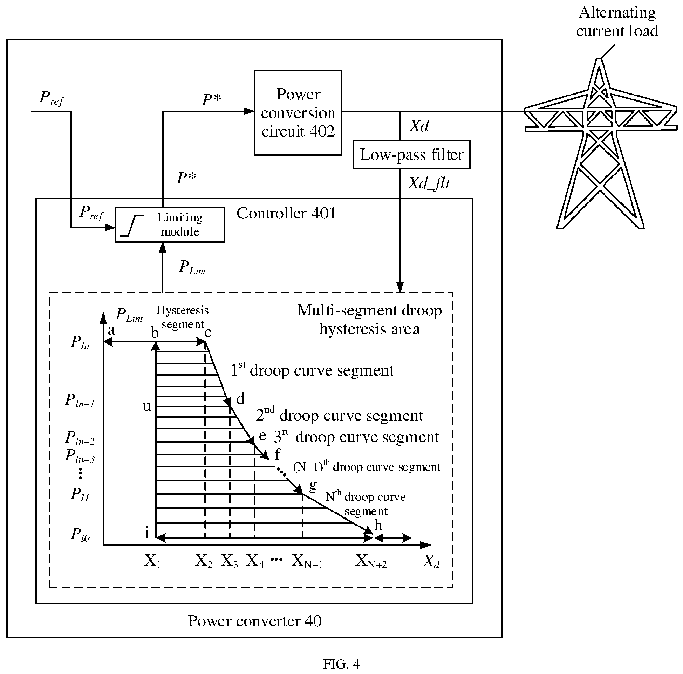

FIG. 4 is a diagram of a structure of a power converter according to this application. As shown in FIG. 4, the power converter 40 includes a controller 401 and a power conversion circuit 402, and the controller 401 is connected to the power conversion circuit 402. The controller 401 is configured to obtain a target power reference value P* of the power conversion circuit 402 based on an output electrical quantity X_{d} of the power conversion circuit 402 and a multi-segment droop hysteresis area. The controller 401 is further configured to control an output power of the power conversion circuit 402 to be equal to the target power reference value P*.

It should be noted that the target power reference value P* may be a target active power reference value or a target reactive power reference value.

The output electrical quantity X_{d} may be understood as an electrical quantity of an alternating current load, that is, an electrical quantity that is between an alternating current output end of the power converter 40 and a grid-connected access point of the alternating current load and that is obtained when the alternating current output end of the power converter 40 is connected to the grid-connected access point. The output electrical quantity X_{d} may be an output voltage, an output frequency, or the like. It may be understood that the multi-segment droop hysteresis area indicates a correspondence between the output electrical quantity X_{d} and a power limit value Plmt. In other words, the controller may obtain the power limit value Plmt based on the output electrical quantity X_{d} and the multi-segment droop hysteresis area.

Optionally, after collecting the output electrical quantity X_{d} of the power converter, the controller 401 may perform low-pass filtering to obtain a filtered output electrical quantity value X_{d_*flt*}. The target power reference value P* of the power conversion circuit 402 is obtained based on the filtered output electrical quantity value X_{d_*flt*} and the multi-segment droop hysteresis area. The output electrical quantity X_{d} in the following description may be alternatively replaced with the filtered output electrical quantity value X_{d_*flt*}.

In some feasible implementations, the controller 401 is configured to: obtain the power limit value Plmt corresponding to the output electrical quantity based on the output electrical quantity X_{d} and the multi-segment droop hysteresis area; when an original power reference value Pref is less than 0, obtain the target power reference value P* equal to 0; when the original power reference value Pref is greater than or equal to 0 and less than or equal to the power limit value Plmt, obtain the target power reference value P* equal to the original power reference value Pref; and when the original power reference value Pref is greater than the power limit value Plmt, obtain the target power reference value P* equal to the power limit value Plmt. That the controller obtains the target power reference value P* by comparing the power limit value Plmt with the original power reference value Pref of the power conversion circuit may be understood as that the target power reference value P* is obtained by limiting the original power reference value Pref based on the power limit value Plmt. For example, a minimum limit value is 0, and a maximum limit value is the power limit value Plmt. In other words, the target power reference value P* is greater than or equal to 0 and less than or equal to the power limit value Plmt. Specifically, when the original power reference value Pref is less than 0, the target power reference value P* obtained through limiting is equal to 0. When the original power reference value Pref is greater than or equal to 0 and less than or equal to the power limit value Plmt, the target power reference value P* obtained through limiting is equal to the original power reference value Pref. When the original power reference value Pref is greater than the power limit value Plmt, the target power reference value P* obtained through limiting is equal to the power limit value Plmt. The target power reference value P* is obtained by limiting the original power reference value Pref, and the output power value of the power conversion circuit is controlled to be equal to the target power reference value P*, to quickly adjust the output power of the power converter 40 in the region in a scenario with a high PV-to-storage ratio, thereby improving reliability and security of the power converter.

Optionally, the controller 401 may include a limiting module, configured to limit the original power reference value Pref based on the power limit value Plmt, to obtain the target power reference value P*. It may be understood that the limiting module may be included in the controller 401, or may be outside the controller 401, that is, connected to an input end of the power conversion circuit 402. A connection manner of the limiting module is not limited in this embodiment of this application.

In some feasible implementations, the controller 401 is configured to: when the output electrical quantity X_{d} is greater than or equal to a first electrical quantity threshold X₁ and less than a second electrical quantity threshold X₂, obtain the power limit value Plmt corresponding to the output electrical quantity X_{d} as a value corresponding to a hysteresis curve segment in the multi-segment droop hysteresis area; when the output electrical quantity X_{d} is greater than or equal to the second electrical quantity threshold X₂ and less than a third electrical quantity threshold X₃, obtain the power limit value Plmt corresponding to the output electrical quantity X_{d} as a value corresponding to a 1^{st} droop curve segment in the multi-segment droop hysteresis area; when the output electrical quantity X_{d} is greater than or equal to the third electrical quantity threshold X₃ and less than a fourth electrical quantity threshold X₄, obtain the power limit value Plmt corresponding to the output electrical quantity X_{d} as a value corresponding to a 2^{nd} droop curve segment in the multi-segment droop hysteresis area; ...; and when the output electrical quantity X_{d} is greater than or equal to an (N+1)^{th} electrical quantity threshold X_{N+1} and less than an (N+2)^{th} electrical quantity threshold X_{N+2}, obtain the power limit value Plmt corresponding to the output electrical quantity X_{d} as a value corresponding to an N^{th} droop curve segment in the multi-segment droop hysteresis area, where N is a positive integer greater than or equal to 1.

It may be understood that, when the output electrical quantity X_{d} is less than the first electrical quantity threshold X₁, the power limit value Plmt may remain as Pln in a line segment ab in FIG. 4. For example, Pln is a per-unit value 1, and is represented as a rated power of the power converter 40, for example, a rated active power.

When the output electrical quantity X_{d} is greater than or equal to the first electrical quantity threshold X₁, the power limit value Plmt may be obtained based on the multi-segment droop hysteresis area. The multi-segment droop hysteresis area may include the hysteresis curve segment and N droop curve segments. For example, when the output electrical quantity X_{d} is greater than or equal to the first electrical quantity threshold X₁ and less than the second electrical quantity threshold X₂, the power limit value Plmt may be the value corresponding to the hysteresis curve segment, for example, a line segment bc in FIG. 4 is considered as the hysteresis segment, the power limit value Plmt remains to be the per-unit value 1.

When the output electrical quantity X_{d} is greater than the second electrical quantity threshold X₂, the power limit value Plmt enters the N droop curve segments, and the power limit value Plmt may correspond to a value corresponding to a droop curve segment in the N droop curve segments based on the electrical quantity thresholds. For example, when the output electrical quantity X_{d} is greater than or equal to the second electrical quantity threshold X₂ and less than the third electrical quantity threshold X₃, the power limit value Plmt corresponding to the output electrical quantity X_{d} is the value corresponding to the 1^{st} droop curve segment in the N droop curve segments, that is, the power limit value Plmt corresponding to the output electrical quantity X_{d} is determined by a line segment cd in FIG. 4 with a value range from Pln-1 to Pln. Pln-1 is a predefined power limit value corresponding to X₄ equal to X₃. When the output electrical quantity X_{d} is greater than or equal to the third electrical quantity threshold X₃ and less than the fourth electrical quantity threshold X₄, the power limit value Plmt corresponding to the output electrical quantity X_{d} is the value corresponding to the 2^{nd} droop curve segment in the N droop curve segments, that is, the power limit value Plmt corresponding to the output electrical quantity X_{d} is determined by a line segment de in FIG. 4 with a value range from Pln-2 to Pln-1. Pln-2 is a predefined power limit value corresponding to X_{d} equal to X₄.... When the output electrical quantity X_{d} is greater than or equal to the (N+1)^{th} electrical quantity threshold X_{N+1} and less than the (N+2)^{th} electrical quantity threshold X_{N+2}, the power limit value Plmt corresponding to the output electrical quantity X_{d} is the value corresponding to the N^{th} droop curve segment in the N droop curve segments, that is, the power limit value Plmt corresponding to the output electrical quantity X_{d} is determined by a line segment gh in FIG. 4 with a value range from Pl0 to Pl1. Pl1 is a predefined power limit value corresponding to X_{d} equal to X_{N+1}. Pl0 is a predefined power limit value corresponding to X₄ equal to X_{N+2}.

In some feasible implementations, when the power limit value Plmt corresponding to the output electrical quantity X_{d} is a value corresponding to the N droop curve segments in the multi-segment droop hysteresis area, a power limit value Plmt corresponding to a first moment is less than or equal to a power limit value Plmt corresponding to a second moment, and the first moment is later than the second moment. It may be understood that, on the N droop curve segments, adjacent power limit values Plmt in a time sequence only decrease rather than increase, so that the output power of the power converter 40 can be prevented from significantly fluctuating, to prevent repeated and continuous oscillations of the output power of the power converter 40, and improve system stability. Further description is provided with reference to FIG. 4. When the power limit value Plmt corresponding to the output electrical quantity X_{d} is a value on any one of droop curves cd, de, ef, ..., and gh, adjacent values in the time sequence approximately only decrease but not increase. For example, it is assumed that t1<t2<t3. If X_{d}(t2)>X_{d}(t1), Plmt(t2)<Plmt(t1). If X_{d}(t3)<X_{d}(t2), Plmt(t3) is not a value on the line segments cd, de, ef, ..., and gh, but a value obtained according to Plmt(t3) - Plmt(t2) ≤ *ε*, where *ε* is a predefined value to avoid significant fluctuation of the value of Plmt during voltage fluctuation. When *ε* is set to 0, values of Plmt on the droop curves cd, de, ef, ..., and gh only decrease but not increase. X_{d}(t1)=X₃ is used as an example. When X_{d}(t2) and X_{d}(t3) are less than X₃, Plmt(t2) and Plmt(t3) are a value on a horizontal line du.

When the output electrical quantity X_{d} is greater than X_{N+2}, the value of Plmt is limited to Pl0. When a subsequent output electrical quantity X_{d} in the time sequence is less than X_{N+2}, the value of Plmt still approximately only decreases but not increases. For a specific manner, refer to values of the line segments cd, de, ef, ..., and gh.

It can be learned from the foregoing description that, when X_{d}>X₂, Plmt may be all points in an N-segment droop hysteresis area bedefghiub.

In some feasible implementations, the controller 401 is further configured to: when time at which the output electrical quantity X_{d} is less than the second electrical quantity threshold reaches a first threshold, increase, based on preset time, the power limit value Plmt to the value corresponding to the hysteresis curve segment in the multi-segment droop hysteresis area. When it is detected that the output electrical quantity X_{d} of the power converter 40 tends to be normal, the power limit value Plmt is restored. To be specific, when the time at which the output electrical quantity X_{d} is less than the second electrical quantity threshold reaches the first threshold, it may indicate that the output electrical quantity X_{d} of the power converter 40 is in a normal state, and the power limit value Plmt may be restored based on a specific predefined gradient to the value corresponding to the hysteresis curve segment. The specific predefined gradient may be understood as preset time, and the power limit value Plmt increases to the value corresponding to the hysteresis curve segment in the multi-segment droop hysteresis area within the preset time. In a further description with reference to FIG. 4, when a system is restored to normal or X_{d}<X₂, Plmt needs to exit the droop hysteresis area. If X₁<X_{d}<X₂ and duration reaches a preset value, the value of Plmt is restored based on a specific gradient until the value of Plmt is restored to the maximum value Pln. If X_{d}<X₁, after predefined time, the value of Plmt is restored based on the specific gradient, until the value of Plmt is restored to the maximum value Pln. The predefined time may be greater than or equal to 0.

It may be understood that, in a process in which Plmt is restored to the maximum value based on the specific gradient, if X_{d}>X₂, Plmt enters the N-segment droop hysteresis area bcdefghiub again to adjust Plmt. It should be noted that the specific gradient may be a predefined fixed gradient, or may be an adaptive gradient according to a specific rule.

Further, optionally, in some feasible implementations, the controller 401 is further configured to: when a quantity of times that the output electrical quantity X_{d} is greater than or equal to the second electrical quantity threshold exceeds a second threshold, increase the preset time. A gradient value may be reduced based on the quantity of times of entering the N-segment droop hysteresis area, and a restoration speed of the power limit value Plmt is correspondingly slowed down, thereby prolonging restoration time, avoiding entering and exiting the N-segment droop hysteresis area for a plurality of times within short time, further avoiding oscillations of the output power, and providing sufficient adjustment time for upper-layer power scheduling.

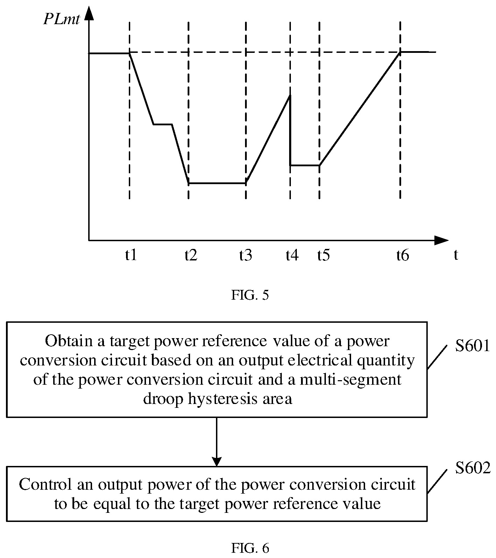

FIG. 5 is a diagram of a curve of a power limit value according to this application. *ε* is set to 0 and a gradient is customized. When an output electrical quantity suddenly increases to a normal value, as shown in FIG. 5, when t<t1, the output electrical quantity is within a normal range, and Plmt is obtained as a rated power of a power converter based on a multi-segment droop hysteresis area, and is equivalent to being unlimited. When t ∈ [t1, t2], the output electrical quantity suddenly increases, and a segmental droop curve appears based on a hysteresis feature of the multi-segment droop hysteresis area. When t ∈ [t2, t3], the output electrical quantity does not further increase, and Plmt remains constant. When t ∈ [t3, t4], the output electrical quantity is restored to normal, and Plmt is restored based on a predefined gradient. When t = t4, the output electrical quantity suddenly increases, and Plmt enters the multi-segment droop hysteresis area again. When t ∈ [t4, t5], the output electrical quantity does not further increase, and Plmt remains constant. When t ∈ [t5, t6], the output electrical quantity is restored to normal, and Plmt is restored to a maximum value based on an adaptive gradient. When t>t6, the output electrical quantity is within a normal range, and Plmt is the rated power of the power converter, and is equivalent to being unlimited.

In the solutions provided in embodiments of this application, a method for fast adjusting a frequency and a voltage by a controller based on a multi-segment droop hysteresis area is provided, to avoid significant fluctuation of an output power in a transient state; a method for suppressing power oscillations by the controller based on an adaptive restoration gradient is provided, to adaptively reduce a restoration gradient based on a quantity of times of entering the droop hysteresis area, thereby avoiding entering the droop hysteresis area for a plurality of times within short time, and providing sufficient time for upper-layer power scheduling; and a customized hysteresis segment timing restoration method is provided, to reduce an impact of the droop hysteresis area and increase the output power when the system is in a normal state.

The following describes a power control method for a power converter by using an example. FIG. 6 is a schematic flowchart of a power control method for a power converter according to this application. The power control method for the power converter provided in this application is applicable to the controller in the power converter shown in FIG. 4, and the controller is connected to the power conversion circuit in the power converter. As shown in FIG. 6, the power control method for the power converter provided in this application includes the following steps.

S601: Obtain a target power reference value of the power conversion circuit based on an output electrical quantity of the power conversion circuit and a multi-segment droop hysteresis area.

The output power of the power conversion circuit is limited based on the power conversion circuit by adding the controller. An input of the controller is the output electrical quantity of the power conversion circuit, and an output of the controller is a power limit value. The multi-segment droop hysteresis area indicates a correspondence between the output electrical quantity and the power limit value. In other words, the controller may obtain the power limit value based on the output electrical quantity and the multi-segment droop hysteresis area. The power limit value is compared with an original power reference value of the power conversion circuit to obtain the target power reference value.

In some feasible implementations, the obtaining a target power reference value of the power conversion circuit based on an output electrical quantity of the power conversion circuit and a multi-segment droop hysteresis area includes: obtaining, based on the output electrical quantity and the multi-segment droop hysteresis area, a power limit value corresponding to the output electrical quantity; when the original power reference value is less than 0, obtaining the target power reference value equal to 0; when the original power reference value is greater than or equal to 0 and less than or equal to the power limit value, obtaining the target power reference value equal to the original power reference value; and when the original power reference value is greater than the power limit value, obtaining the target power reference value equal to the power limit value. The multi-segment droop hysteresis area indicates the correspondence between the output electrical quantity and the power limit value. In other words, the controller may obtain the power limit value based on the output electrical quantity and the multi-segment droop hysteresis area. That the controller obtains the target power reference value by comparing the power limit value with the original power reference value of the power conversion circuit may be understood as that the target power reference value is obtained by limiting the original power reference value based on the power limit value. For example, a minimum limit value is 0, and a maximum limit value is the power limit value. In other words, the target power reference value is greater than or equal to 0 and less than or equal to the power limit value. Specifically, when the original power reference value is less than 0, the target power reference value obtained through limiting is equal to 0. When the original power reference value is greater than or equal to 0 and less than or equal to the power limit value, the target power reference value obtained through limiting is equal to the original power reference value. When the original power reference value is greater than the power limit value, the target power reference value obtained through limiting is equal to the power limit value. The target power reference value is obtained by limiting the original power reference value, and an output power value of the power conversion circuit is controlled to be equal to the target power reference value, to quickly adjust an output power of the power converter in a region in a scenario with a high PV-to-storage ratio, thereby improving reliability and security of the power converter.

In some feasible implementations, the obtaining, based on the output electrical quantity and the multi-segment droop hysteresis area, a power limit value corresponding to the output electrical quantity includes: when the output electrical quantity is greater than or equal to a first electrical quantity threshold and less than a second electrical quantity threshold, obtaining the power limit value corresponding to the output electrical quantity as a value corresponding to a hysteresis curve segment in the multi-segment droop hysteresis area. When the output electrical quantity is greater than or equal to the first electrical quantity threshold, the power limit value may be obtained based on the multi-segment droop hysteresis area. The multi-segment droop hysteresis area may include the hysteresis curve segment and N droop curve segments. Specifically, when the output electrical quantity is greater than or equal to the first electrical quantity threshold and less than the second electrical quantity threshold, the power limit value may be the value corresponding to the hysteresis curve segment. It may be understood that the hysteresis curve segment can prevent the power limit value from repeatedly entering a droop curve within short time, provide sufficient time for upper-layer power scheduling, and avoid significant fluctuation of the output power, to prevent repeated and continuous oscillations of the output power of the power converter, and improve system stability.

In some feasible implementations, the method further includes: when the output electrical quantity is greater than or equal to the second electrical quantity threshold and less than a third electrical quantity threshold, obtaining the power limit value corresponding to the output electrical quantity as a value corresponding to a 1^{st} droop curve segment in the multi-segment droop hysteresis area; when the output electrical quantity is greater than or equal to the third electrical quantity threshold and less than a fourth electrical quantity threshold, obtaining the power limit value corresponding to the output electrical quantity as a value corresponding to a 2^{nd} droop curve segment in the multi-segment droop hysteresis area; and when the output electrical quantity is greater than or equal to an (N+1)^{th} electrical quantity threshold and less than an (N+2)^{th} electrical quantity threshold, obtaining the power limit value corresponding to the output electrical quantity as a value corresponding to an N^{th} droop curve segment in the multi-segment droop hysteresis area, where N is a positive integer greater than or equal to 1. When the output electrical quantity is greater than the second electrical quantity threshold, the power limit value enters the N droop curve segments, and the power limit value may correspond to a value corresponding to a droop curve segment in the N droop curve segments based on the electrical quantity thresholds. Different power limit values are used in different reference voltage ranges. The power limit value is compared with the original power reference value of the power conversion circuit to obtain the target power reference value, and the output power value of the power conversion circuit is controlled to be equal to the target power reference value, to quickly adjust the output power of the power converter in the region in the scenario with a high PV-to-storage ratio, thereby improving the reliability and security of the power converter.

In some feasible implementations, when the power limit value corresponding to the output electrical quantity is a value corresponding to the N droop curve segments in the multi-segment droop hysteresis area, a power limit value corresponding to a first moment is less than or equal to a power limit value corresponding to a second moment, and the first moment is later than the second moment. On the N droop curve segments, adjacent power limit values in a time sequence only decrease rather than increase, so that the output power of the power converter can be prevented from significantly fluctuating, to prevent repeated and continuous oscillations of the output power of the power converter, and improve the system stability.

In some feasible implementations, when time at which the output electrical quantity is less than the second electrical quantity threshold reaches a first threshold, the power limit value is increased based on preset time to the value corresponding to the hysteresis curve segment in the multi-segment droop hysteresis area. When it is detected that the output electrical quantity of the power converter tends to be normal, the power limit value is restored. To be specific, when the time at which the output electrical quantity is less than the second electrical quantity threshold reaches the first threshold, it may indicate that the output electrical quantity of the power converter is in a normal state, and the power limit value may be restored based on a specific predefined gradient to the value corresponding to the hysteresis curve segment. The specific predefined gradient may be understood as preset time, and the power limit value increases to the value corresponding to the hysteresis curve segment in the multi-segment droop hysteresis area within the preset time.

In some feasible implementations, when a quantity of times that the output electrical quantity is greater than or equal to the second electrical quantity threshold exceeds a second threshold, the preset time is increased. A power limit value restoration speed may be correspondingly slowed down based on a quantity of times of entering the N droop curve segments, to provide sufficient adjustment time for upper-layer power scheduling.

S602: Control an output power of the power conversion circuit to be equal to the target power reference value.

An output power value of the power conversion circuit is controlled to be equal to the target power reference value, and the output power of the power conversion circuit is controlled through a closed loop, to quickly adjust an output power of the power converter in the region in the scenario with a high PV-to-storage ratio, thereby improving the reliability and security of the power converter.

In specific implementations, for more operations performed by the controller in the control method for the power converter provided in this application, refer to the power converter 40 shown in FIG. 4 and the implementations performed by the controller 401 in the working principle of the power converter 40. Details are not described herein again.

In the method provided in this application, the controller may obtain the power limit value based on the output electrical quantity of the power conversion circuit and the multi-segment droop hysteresis area. The power limit value is compared with an original power reference value of the power conversion circuit to obtain the target power reference value, and the output power value of the power conversion circuit is controlled to be equal to the target power reference value, to quickly adjust the output power of the power converter in the region in the scenario with a high PV-to-storage ratio, thereby improving the reliability and security of the power converter.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A power converter, wherein the power converter comprises a controller and a power conversion circuit, and the controller is connected to the power conversion circuit;
the controller is configured to obtain a target power reference value of the power conversion circuit based on an output electrical quantity of the power conversion circuit and a multi-segment droop hysteresis area; and
the controller is further configured to control an output power value of the power conversion circuit to be equal to the target power reference value.

2. The power converter according to claim 1, wherein the controller is configured to:
obtain, based on the output electrical quantity and the multi-segment droop hysteresis area, a power limit value corresponding to the output electrical quantity;
when an original power reference value is less than 0, obtain the target power reference value equal to 0;
when the original power reference value is greater than or equal to 0 and less than or equal to the power limit value, obtain the target power reference value equal to the original power reference value; and
when the original power reference value is greater than the power limit value, obtain the target power reference value equal to the power limit value.

3. The power converter according to claim 2, wherein the controller is configured to: when the output electrical quantity is greater than or equal to a first electrical quantity threshold and less than a second electrical quantity threshold, obtain the power limit value corresponding to the output electrical quantity as a value corresponding to a hysteresis curve segment in the multi-segment droop hysteresis area.

4. The power converter according to claim 3, wherein the controller is configured to:
when the output electrical quantity is greater than or equal to the second electrical quantity threshold and less than a third electrical quantity threshold, obtain the power limit value corresponding to the output electrical quantity as a value corresponding to a 1^{st} droop curve segment in the multi-segment droop hysteresis area;
when the output electrical quantity is greater than or equal to the third electrical quantity threshold and less than a fourth electrical quantity threshold, obtain the power limit value corresponding to the output electrical quantity as a value corresponding to a 2^{nd} droop curve segment in the multi-segment droop hysteresis area; and
when the output electrical quantity is greater than or equal to an (N+1)^{th} electrical quantity threshold and less than an (N+2)^{th} electrical quantity threshold, obtain the power limit value corresponding to the output electrical quantity as a value corresponding to an N^{th} droop curve segment in the multi-segment droop hysteresis area, wherein N is a positive integer greater than or equal to 1.

5. The power converter according to claim 4, wherein when the power limit value corresponding to the output electrical quantity is a value corresponding to N droop curve segments in the multi-segment droop hysteresis area, a power limit value corresponding to a first moment is less than or equal to a power limit value corresponding to a second moment, and the first moment is later than the second moment.

6. The power converter according to any one of claims 3 to 5, wherein the controller is configured to: when time at which the output electrical quantity is less than the second electrical quantity threshold reaches a first threshold, increase, based on preset time, the power limit value to the value corresponding to the hysteresis curve segment in the multi-segment droop hysteresis area.

7. The power converter according to claim 6, wherein the controller is configured to: when a quantity of times that the output electrical quantity is greater than or equal to the second electrical quantity threshold exceeds a second threshold, increase the preset time.

8. The power converter according to any one of claims 1 to 7, wherein the target power reference value is a target active power reference value or a target reactive power reference value.

9. A power control method for a power converter, wherein the method is applied to a controller in the power converter, the power converter further comprises a power conversion circuit, the controller is connected to the power conversion circuit, and the method comprises:
obtaining a target power reference value of the power conversion circuit based on an output electrical quantity of the power conversion circuit and a multi-segment droop hysteresis area; and
controlling an output power value of the power conversion circuit to be equal to the target power reference value.

10. The method according to claim 9, wherein the obtaining a target power reference value of the power conversion circuit based on an output electrical quantity of the power conversion circuit and a multi-segment droop hysteresis area comprises:
obtaining, based on the output electrical quantity and the multi-segment droop hysteresis area, a power limit value corresponding to the output electrical quantity;
when the original power reference value is less than 0, obtaining the target power reference value equal to 0;
when the original power reference value is greater than or equal to 0 and less than or equal to the power limit value, obtaining the target power reference value equal to the original power reference value; and
when the original power reference value is greater than the power limit value, obtaining the target power reference value equal to the power limit value.

11. The method according to claim 10, wherein the obtaining, based on the output electrical quantity and the multi-segment droop hysteresis area, a power limit value corresponding to the output electrical quantity comprises:
when the output electrical quantity is greater than or equal to a first electrical quantity threshold and less than a second electrical quantity threshold, obtaining the power limit value corresponding to the output electrical quantity as a value corresponding to a hysteresis curve segment in the multi-segment droop hysteresis area.

12. The method according to claim 11, wherein the method further comprises:
when the output electrical quantity is greater than or equal to the second electrical quantity threshold and less than a third electrical quantity threshold, obtaining the power limit value corresponding to the output electrical quantity as a value corresponding to a 1^{st} droop curve segment in the multi-segment droop hysteresis area;
when the output electrical quantity is greater than or equal to the third electrical quantity threshold and less than a fourth electrical quantity threshold, obtaining the power limit value corresponding to the output electrical quantity as a value corresponding to a 2^{nd} droop curve segment in the multi-segment droop hysteresis area; and
when the output electrical quantity is greater than or equal to an (N+1)^{th} electrical quantity threshold and less than an (N+2)^{th} electrical quantity threshold, obtaining the power limit value corresponding to the output electrical quantity as a value corresponding to an N^{th} droop curve segment in the multi-segment droop hysteresis area, wherein N is a positive integer greater than or equal to 1.

13. The method according to claim 12, wherein when the power limit value corresponding to the output electrical quantity is a value corresponding to N droop curve segments in the multi-segment droop hysteresis area, a power limit value corresponding to a first moment is less than or equal to a power limit value corresponding to a second moment, and the first moment is later than the second moment.

14. The method according to any one of claims 11 to 13, wherein the method further comprises:
when time at which the output electrical quantity is less than the second electrical quantity threshold reaches a first threshold, increasing, based on preset time, the power limit value to the value corresponding to the hysteresis curve segment in the multi-segment droop hysteresis area.

15. The method according to claim 14, wherein the method further comprises:
when a quantity of times that the output electrical quantity is greater than or equal to the second electrical quantity threshold exceeds a second threshold, increasing the preset time.

16. The method according to any one of claims 9 to 15, wherein the target power reference value is a target active power reference value or a target reactive power reference value.

17. A power supply system, wherein the power supply system comprises a power supply unit and the power converter according to any one of claims 1 to 8, the power supply unit is connected to the power converter, and the power converter is connected to an alternating current load.

18. The power supply system according to claim 17, wherein the power supply unit is a photovoltaic array, and the power converter is a photovoltaic power converter; or the power supply unit is a wind power generator or an energy storage battery, and the power converter is an energy storage power converter.
